**Europäisches Patentamt**

**European Patent Office**

**Office européen des brevets**

(19)

(11) Veröffentlichungsnummer: **0 154 275**
**B1**

(12) **EUROPÄISCHE PATENTSCHRIFT**

(45) Veröffentlichungstag der Patentschrift:
**26.07.89**

(21) Anmeldenummer: **85102046.1**

(22) Anmeldetag: **25.02.85**

(51) Int. Cl.⁴: **C 08 G 18/30**, C 08 G 18/66,
B 29 C 67/22

(54) **Verfahren zur Herstellung von Formkörpern auf Basis von Harnstoffgruppen aufweisenden Polyisocyanat-Polyadditionsprodukten.**

(30) Priorität: **03.03.84 DE 3407931**

(43) Veröffentlichungstag der Anmeldung:
**11.09.85 Patentblatt 85/37**

(45) Bekanntmachung des Hinweises auf die Patenterteilung:
**26.07.89 Patentblatt 89/30**

(84) Benannte Vertragsstaaten:
**AT BE CH DE FR GB IT LI NL SE**

(56) Entgegenhaltungen:
**EP-A- 0 044 226**
**CH-A- 583 265**
**DE-A- 2 160 691**
**US-A- 4 416 844**

(73) Patentinhaber: **BAYER AG,**
**D-5090 Leverkusen 1 Bayerwerk (DE)**

(72) Erfinder: **Ganster, Otto, Dr., Berliner Strasse 64a,**
**D-5090 Leverkusen 1 (DE)**
Erfinder: **Knipp, Ulrich, Dr., Haberlandstrasse 3,**
**D-5060 Bergich-Gladbach 2 (DE)**
Erfinder: **Luckas, Bruno, Petersbergstrasse 4,**
**D-5090 Leverkusen 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein neues Verfahren zur Herstellung von Formkörpern auf Basis von Harnstoffgruppen aufweisenden Polyisocyanat-Polyadditionsprodukten, insbesondere Polyurethanen einer über 900 kg/m³ liegenden Rohdichte, bei welchem die zur Erzielung hochwertiger mechanischer Eigenschaften erforderlichen Harnstoffgruppen überwiegend durch Umsetzung von aromatischen Polyisocyanaten mit in situ aus aromatischen Polyisocyanaten und Wasser erhaltenen aromatischen Aminen erzeugt werden.

Es ist bereits bekannt, Formkörper aus Harnstoffgruppen aufweisenden Polyurethanen durch Umsetzung in geschlossenen Formen eines Reaktionsgemisches aus aromatischen Polyisocyanaten, höhermolekularen Polyhydroxylverbindungen und aromatischen Diaminen mit primären und/oder sekundären Aminogruppen als oneshot-System nach der Reaktionsspritzgußtechnik herzustellen (vgl. z.B. US-PS 4 218 543 oder DE-OS 3 147 736). Die so erhaltenen Formkörper weisen aufgrund ihres hohen Gehalts an Harnstoffgruppierungen hervorragende mechanische Eigenschaften auf. Die für diese mechanischen Eigenschaften unverzichtbaren Harnstoffgruppierungen werden bei den Verfahren des Standes der Technik durch Mitverwendung von aromatischen Diaminen als zwingend erforderliche Reaktionskomponente in das Polyurethangerüst eingebaut. Der genannte Vorteil ausgezeichneter mechanischer Eigenschaften der Verfahrensprodukte muß jedoch bei den Verfahren des Standes der Technik mit dem Nachteil erkauft werden, daß teure, spezielle aromatische Diamine wie z.B. 1-Methyl-3,5-diethyl-2,4-diaminobenzol oder dessen Gemische mit 1-Methyl-3,5-diethyl-2,6-diaminobenzol als Aufbaukomponente mitverwendet werden müssen, die eine sehr hohe Reaktivität gegenüber aromatisch gebundenen Isocyanatgruppen aufweisen, so daß die hochreaktiven Reaktionsgemische des genannten Standes der Technik innerhalb kürzester Zeit in die Formen eingetragen werden müssen, was bei Befüllen von großvolumigen Formen nur unter Verwendung von speziellen hochleistungsfähigen Dosiervorrichtungen möglich ist.

Es war daher die der Erfindung zugrundeliegende Aufgabe, ein neues Verfahren zur Herstellung von Formkörpern auf Basis von Harnstoff-modifizierten Polyisocyanat-Polyadditionsprodukten, insbesondere Polyurethanen einer über 900 kg/m³ liegenden Rohdichte (DIN 53 420) zur Verfügung zu stellen, bei welchem die Mitverwendung von in der Regel teuren aromatischen Diaminen nicht mehr oder nur in vergleichsweise sehr geringen Mengen erforderlich ist, so daß die Vorteile der Verfahren des Standes der Technik unter Beseitigung der genannten Nachteile beibehalten werden können.

Diese Aufgabe konnte durch die Bereitstellung des nachstehend näher beschriebenen erfindungsgemäßen Verfahrens gelöst werden. Das dem erfindungsgemäßen Verfahren zugrundeliegende Prinzip besteht darin, die zur Erzeugung von Harnstoffgruppen erforderlichen Aminogruppen in situ durch Reaktion eines Teils der Isocyanatgruppen der Polyisocyanatkomponente mit Wasser zu erzeugen, und gleichzeitig die Erzeugung von Schaumstrukturen durch Aufrechterhaltung eines äußeren Drucks weitestgehend zu verhindern.

Die Herstellung von Harnstoffgruppen aufweisenden Polyurethanen durch Umsetzung von organischen Polyisocyanaten mit organischen Polyhydroxylverbindungen in Gegenwart von Wasser ist zwar bereits bekannt, jedoch erfolgte die Mitverwendung des Wassers bei diesen bekannten Verfahren bislang vorwiegend bzw. ausschließlich, um das bei der Reaktion zwischen Isocyanatgruppen und Wasser entstehende Kohlendioxid als Treibmittel zwecks Erzielens von Schaumstrukturen zu nutzen (vgl. z.B. Kunststoff-Handbuch Band VII «Polyurethane», Carl Hanser-Verlag München (1966) Seiten 440 ff.). Auch die Herstellung von massiven Polyurethanelastomeren unter Verwendung von Wasser als Kettenverlängerungsmittel nach dem Zweistufenverfahren ist bereits bekannt (vgl. z.B. Kunststoff-Handbuch, Seiten 270–271), jedoch führte auch diese Herstellung von massiven Elastomeren über die Zwischenstufe der entsprechenden Schaumstoffe, die im Anschluß an ihre Herstellung auf Walzen verdichtet und schließlich zu massiven Elastomeren verpreßt wurden.

Demgegenüber wird beim erfindungsgemäßen Verfahren erstmals ein wasserhaltiges Reaktionsgemisch zu praktisch nicht geschäumten Harnstoff-modifizierten Polyurethanen umgesetzt, ohne daß intermediär Schaumstoffe entstehen, die zu nicht-geschäumten Polyurethanen verpreßt werden müssen. Dies wird erfindungsgemäß dadurch erreicht, daß während der Umsetzung auf das flüssige Reaktionsgemisch ein solcher Druck ausgeübt wird, daß das entstehende Kohlendioxid in dem Reaktionsgemisch bzw. dem resultierenden Polyurethan ganz oder weitgehend gelöst bleibt.

Die US-PS 4 416 844 beschreibt zwar bereits die Umsetzung von organischen Polyhydroxylverbindungen mit organischen Polyisocyanaten in Gegenwart von Wasser unter solchen Druckbedingungen, daß das sich bildende Kohlendioxid im resultierenden Kunststoff gelöst bleibt, jedoch dient das genannte Prinzip gemäß Vorveröffentlichung zur Herstellung von Reifen, die mit weichelastischem Kunststoff gefüllt sind, wobei das gelöste Kohlendioxid zur Erhöhung des Reifendrucks und zur Erhöhung der Elastizität des Reifens dient, die Herstellung von Formkörpern nach der Reaktionsspritzgußtechnik wird in dieser Vorveröffentlichung nicht angesprochen.

Gegenstand der Erfindung ist ein Verfahren zur Herstellung von massiven oder mikrozellularen Formkörpern auf Basis von Harnstoffgruppen aufweisenden Polyisocyanat-Polyadditionsprodukten mit einer geschlossenen Oberflächenschicht und einer über 900 kg/m³ liegenden Rohdichte durch Umsetzung von

a) einer Polyisocyanatkomponente, bestehend aus mindestens einem Polyisocyanat mit ausschließlich aromatisch gebundenen Isocyanatgruppen mit

b) Verbindungen mit mindestens zwei gegenüber Isocyanatgruppen reaktionsfähigen Wasserstoffatomen des Molekulargewichtsbereichs 400 bis 12 000, in einer Menge von mindestens 25 Gew.%, bezogen auf das gesamte Reaktionsgemisch, ohne Einbeziehung von gegebenenfalls mitverwendeten inerten Hilfs- und Zusatzmitteln,

c) gegebenenfalls Verbindungen mit mindestens zwei gegenüber Isocyanatgruppen reaktionsfähigen Wasserstoffatomen des Molekulargewichtsbereichs 60 bis 399 und

d) gegebenenfalls den üblichen Hilfs- und Zusatzmitteln,

wobei das Reaktionsgemisch nach der Reaktionsspritzgußtechnik verarbeitet wird, dadurch gekennzeichnet, daß man

(i) die Umsetzung in Gegenwart von Wasser in einer Menge von mindestens 0,15 Mol pro Mol Isocyanatgruppen der Komponente a) unter Einhaltung einer Isocyanatkennzahl, bezogen auf alle an der Umsetzung beteiligten Reaktionskomponenten, von 70 bis 125, durchführt, wobei die Menge an organischen Diaminen in Komponente c) maximal 30 Mol%, bezogen auf das eingesetzte Wasser, beträgt, und wobei man

(ii) das Reaktionsgemisch in eine geschlossene Form einträgt, in welcher während der Reaktion in dem Reaktionsgemisch ein solcher Druck oberhalb 40 bar aufrechterhalten wird, daß das im Verlauf der Reaktion gebildete Kohlendioxid ganz oder überwiegend im Reaktionsgemisch bzw. dem entstehenden Formkörper gelöst bleibt, und man

(iii) den resultierenden Formkörper nach Beendigung der Reaktion entformt.

Die Verfahrensweise der Reaktionsspritzgußtechnik (Reaction Injection Molding, abgekürzt: RIM) ist mittlerweile ein Standardverfahren der Herstellung von Polyurethanformkörpern und ist beispielsweise in «Reaction Injection Molding» von W.E. Becker, Van Nostrand Reinhold Company, New York, Cincinnati, London, Atlanta, Toronto, Dallas, San Francisco, Melbourne (1979) beschrieben.

Ausgangsmaterialien a) sind beliebige organische Polyisocyanate mit ausschließlich aromatisch gebundenen Isocyanatgruppen, insbesondere die aus der Polyurethanchemie bekannten technisch wichtigen aromatischen Polyisocyanate wie z.B. 2,4-Diisocyanatotoluol, dessen technische Gemische mit 2,6-Diisocyanatotoluol und insbesondere die bekannten Polyisocyanate bzw. Polyisocyanatgemische der Diphenylmethanreihe. Die Polyisocyanate können in unmodifizierter Form oder aber auch in Urethan-, Carbodiimid- und/oder Isocyanurat-modifizierter Form zum Einsatz gelangen. Bei den «Polyisocyanaten bzw. Polyisocyanatgemischen der Diphenylmethanreihe» handelt es sich um 4,4'-Diisocyanatodiphenylmethan, dessen Gemische mit 2,4'- und gegebenenfalls 2,2'-Diisocyanatodiphenylmethan und/ oder mit ihren höherfunktionellen Homologen. Derartige Gemische, die auch die höherfunktionellen Homologen enthalten, sind durch Phosgenierung der entsprechenden Anilin/Formaldehyd-Kondensate in bekannten Weise zugänglich. Vorzugsweise weisen die beim erfindungsgemäßen Verfahren einzusetzenden Polyisocyanatgemische der Diphenylmethanreihe einen Gehalt an difunktionellen Isocyanaten von mindestens 60 Gew.-%, im Falle der Herstellung von besonders schlagzähen, harten Formkörpern oder von elastischen Formkörpern von mindestens 90 Gew.-% auf. Die beim erfindungsgemäßen Verfahren zum Einsatz gelangenden Polyisocyanate sind vorzugsweise bei Raumtemperatur flüssig. Zu den besonders bevorzugten Polyisocyanaten gehören Umsetzungsprodukte von 1 Mol 4,4'-Diisocyanatodiphenylmethan mit 0,05 bis 0,3 Mol an niedermolekularen Diolen oder Triolen, vorzugsweise Polypropylenglykolen mit einem unter 700 liegenden Molekulargewicht oder Carbodiimid-modifiziertes (bzw. Uretonimin-modifiziertes) 4,4'-Diisocyanatodiphenylmethan, wie es beispielsweise gemäß US-PS 3 152 162 zugänglich ist. Ebenso bevorzugt sind Gemische dieser Urethan- bzw. Carbodiimidmodifizierten Diisocyanate untereinander oder mit gegebenenfalls ebenso modifiziertem 2,4'-Diisocyanatodiphenylmethan bzw. mit den genannten, gegebenenfalls ebenso modifizierten, höherfunktionellen, homologen Polyisocyanaten, wobei die Gemische sowohl durch entsprechende Modifizierung von Gemischen entsprechender Ausgangspolyisocyanate als auch durch Abmischung von zumindest zum Teil vorab modifizierten Polyisocyanaten hergestellt werden können. Auch NCO-Prepolymere und NCO-Semiprepolymere auf Basis der beispielhaft genannten Polyisocyanate und den nachstehend genannten Polyhydroxylverbindungen b) und c) können als Polyisocyanatkomponente a) Verwendung finden.

Geeignete Ausgangskomponenten b) sind insbesondere Polyester- bzw. Polyetherpolyole des Molekulargewichtsbereichs 400–12 000, vorzugsweise 900–6000 oder beliebige Gemische derartiger Verbindungen. Die genannten Polyhydroxylverbindungen weisen mindestens 2, vorzugsweise 2 bis 6 alkoholische Hydroxylgruppen auf und werden nach bekannten Verfahren aus bekannten Ausgangsmaterialien hergestellt.

Geeignete Polyesterpolyole werden beispielsweise durch Umsetzung überschüssiger Mengen mehrwertiger Alkohole mit mehrbasischen, vorzugsweise dibasischen Carbonsäuren bzw. Carbonsäureanhydriden erhalten. Geeignete Carbonsäuren, Carbonsäureanhydride und niedermolekulare, mehrwertige Alkohole sind beispielsweise die in US-PS 4 218 543, Kolonne 8, Zeilen 27–52 genannten Verbindungen.

Für das erfindungsgemäße Verfahren geeignete Polyetherpolyole können beispielsweise in an sich bekannter Weise durch Alkoxylierung geeigneter Startermoleküle, insbesondere unter Verwendung von Ethylenoxid und/oder Propylenoxid gegebenenfalls im Gemisch oder in beliebiger Reihenfolge erhalten werden. Geeignete Startermoleküle sind beispielsweise Wasser, Ethylenglykol, 1,2-Dihydroxypropan, Trimethylolpropan und/oder Glycerin.

Neben oder anstelle der genannten Polyester- und/oder Polyetherpolyole können beim erfindungsgemäßen Verfahren als Komponente b) auch andere höhermolekulare Verbindungen des genannten Molekulargewichtsbereichs mit gegenüber Isocyanatgruppen reaktionsfähigen Gruppen als Komponente b) eingesetzt werden. Hierzu gehören beispielsweise Polyester auf Lactonbasis, wie Poly-ε-caprolactone, oder Polyester auf Basis von ω-Hydroxyalkancarbonsäuren wie ω-Hydroxycapronsäure, Polycarbonatpolyole, Polyesteramide oder Hydroxylgruppen aufweisende Polyacetale des genannten Molekulargewichtsbereichs. Auch die sogenannten Aminopolyether oder Aminohydroxypolyether des oben genannten Molekulargewichtsbereichs kommen als Komponente b) in Betracht. In diesen Verbindungen stellen die endständigen, gegenüber Isocyanatgruppen reaktionsfähigen Gruppen zumindest zu 25, vorzugsweise zu 50 und insbesondere zu 80–100 Äquivalentprozent primäre und/oder sekundäre, aromatisch oder aliphatisch gebundener Aminogruppen dar. Die Herstellung derartiger Aminopolyether ist beispielsweise in DE-OS 3 231 399, BE-PS 634 741, US-PS 3 654 370, DE-PS 1 193 671, US-PS 3 155 728, US-PS 3 236 895, FR-PS 1 551 605, FR-PS 1 466 708, DE-OS 2 019 432, DE-OS 2 619 840, US-PS 3 808 250, US-PS 3 975 428, US-PS 4 016 143, DE-OS 2 546 536, US-PS 3 865 791, DE-OS 2 948 419 oder DE-OS 3 039 600 beschrieben.

Besonders bevorzugt werden jedoch als Aufbaukomponenten (b) die beispielhaft genannten Polyester- und Polyetherpolyole eingesetzt.

Bei den gegebenenfalls mitzuverwendenden niedermolekularen Verbindungen c) des Molekulargewichtsbereichs 60–399 handelt es sich vorzugsweise um mehrwertige aliphatische, gegebenenfalls Ethergruppen aufweisende Alkohole des Molekulargewichtsbereichs 62–399 wie z.B. Ethylenglykol, 1,2-Dihydroxypropan, 1,3-Dihydroxypropan, 1,4-Dihydroxybutan, 1,6-Dihydroxyhexan, Diethylenglykol, Triethylenglykol, Dipropylenglykol, Tripropylenglykol, Trimethylolpropan, Glycerin, niedermolekulare Alkoxylierungsprodukte der genannten Ethergruppen-freien mehrwertigen Alkohole oder um beliebige Gemische derartiger niedermolekularer Kettenverlängerungsmittel bzw. Vernetzer. Es ist ebenfalls möglich, als Aufbaukomponente c) organische Diamine mit mindestens zwei primären und/oder sekundären Aminogruppen des Molekulargewichtsbereichs 60–399 mitzuverwenden, wie z.B. 1,2-Diaminoethan, 1,6-Diaminohexan, 2,4-Diaminotoluol, 4,4′-Diaminodiphenylmethan und insbesondere aromatische Diamine mit sterisch gehinderten Aminogruppen, die bei Raumtemperatur flüssig sind und wie sie beispielhaft in DE-OS 2 916 485, Seite 17, Zeile 26 bis Seite 18, Zeile 9 erwähnt werden. Bei Raumtemperatur flüssige Gemische der dort genannten Diamine können auch eingesetzt werden. Da es jedoch die der Erfindung zugrundeliegende Aufgabe war, auf die Mitverwendung derartiger Amine weitgehend verzichten zu können, werden diese allenfalls in geringen Mengen von maximal 30 Mol-%, bezogen auf das eingesetzte Wasser, als «Viskositätsregler» mitverwendet. Durch die sofort einsetzende Reaktion zwischen Isocyanatgruppen und Aminogruppen kann eine gegebenenfalls erwünschte Erhöhung der Viskosität des flüssigen Reaktionsgemischs vor Einsetzen der Hauptreaktion erreicht werden. Dies ist aus werkzeugtechnischen Gründen (Abdichtung der Trennebene, der Auswerfer und der Kernzüge) oftmals vorteilhaft.

Bei den gegebenenfalls mitzuverwendenden Hilfs- und Zusatzmitteln d) handelt es sich beispielsweise um die üblichen Emulgatoren, Katalysatoren, Gleitmittel, innere Formtrennmittel, Stabilisatoren, pulverförmige oder fasrige verstärkende Füllstoffe, Flammschutzmittel oder Weichmacher der beispielsweise in DE-OS 3 147 736 oder im bereits zitierten Kunststoff-Handbuch auf Seiten 96 ff. genannten Art.

Der erste erfindungswesentliche Punkt besteht in der Mitverwendung von Wasser als weiteren Reaktionspartner. Das Wasser wird bei der Durchführung des erfindungsgemäßen Verfahrens in einer Menge von mindestens 0,15 Mol, vorzugsweise 0,25 bis 0,49 Mol pro Mol der in der Komponente a) vorliegenden Isocyanatgruppen mitverwendet. Im übrigen werden die Reaktionspartner in, einer Isocyanatkennzahl von 70 bis 125, vorzugsweise 85 bis 115 entsprechenden Mengen eingesetzt. Unter «Isocyanatkennzahl» ist hierbei die Anzahl der im Reaktionsgemisch vorliegenden Isocyanatgruppen pro 100 gegenüber Isocyanatgruppen reaktionsfähigen Gruppen zu verstehen, wobei Wasser als difunktionelle Verbindung in die Berechnung eingeht.

Die Durchführung des erfindungsgemäßen Verfahrens erfolgt durch Umsetzung der genannten Reaktionspartner nach der Reaktionsspritzgußtechnik, wobei vorzugsweise die Komponenten b) bis d) und auch das eingesetzte Wasser zu einer «Polyolkomponente» vereinigt werden, die mit der Polyisocyanatkomponente a) unter Verwendung der aus der Reaktionsspritzgußtechnik bekannten Mischaggregate zu dem flüssigen, zum Harnstoffmodifizierten Polyurethan ausreagierenden Gemisch vereinigt wird. Die Menge der hierbei zum Einsatz gelangenden Komponente a) beträgt hierbei im allgemeinen 15–300 Gew.-%, vorzugsweise 35–200 Gew.-%, bezogen auf die Gesamtmenge der Komponenten b), c) und d) ohne Einbeziehung von gegebenenfalls mitverwendeten inerten Hilfs- und Zusatzmitteln. Gewichtsmäßig hohe Isocyanatüberschüsse können dann vorliegen, wenn als Polyisocyanatkomponente a) NCO-Prepolymere auf Basis einfacher Polyisocyanate und den unter b) und gegebenenfalls den unter c) genannten Polyhydroxylverbindungen eingesetzt werden. Die Menge der Komponente b) beträgt jedoch in jedem Fall mindestens 25 Gew.-%, bezogen auf das gesamte Reaktionsgemisch ohne Einbeziehung von gegebenenfalls mitverwendeten inerten Hilfs- und Zusatzmitteln. Die oben gemachten Ausführungen bezüglich der Isocyanatkennzahl beziehen sich auf die einzelnen Komponenten als solche, d.h. die gegebenenfalls bereits in der Komponente a) eingebauten Polyhydroxylverbindungen werden bei der Berechnung der Isocyanatkennzahl nicht berücksichtigt.

Der zweite erfindungswesentliche Punkt besteht darin, dieses vorzugsweise durch Hochdruck-Injektionsvermischung erzeugte Reaktionsgemisch in ein flüssigkeitsdichtes, vorzugsweise auf eine Temperatur im Bereich von 30–70 °C temperiertes Werkzeug, welches vorzugsweise aus Metall, insbesondere Stahl, besteht, zu füllen. In diesem Werkzeug wird während der Reaktion ein solcher Druck oberhalb 40 bar aufrechterhalten, daß das im Laufe der Reaktion gebildete Kohlendioxid ganz oder überwiegend in Lösung bleibt. Die Aufrechterhaltung des Druckes geschieht entweder

a) durch Anwendung eines äußeren Druckes, beispielsweise mittels einer Presse (Formenschließeinheit), oder

b) durch Verwendung eigensteifer, druckfester Werkzeuge.

Vorzugsweise werden hierbei die zum Einsatz gelangenden Formwerkzeuge vollständig mit dem flüssigen Reaktionsgemisch gefüllt, bevor eine nennenswerte chemische Umsetzung stattfindet.

Bei Verwendung von flüssigkeitsdichten und druckstabilen Formen genügt es zur Bildung und Aufrechterhaltung des benötigten Drucks, die Form nach ihrer Befüllung flüssigkeitsdicht abzuschließen.

Im Falle der Verwendung von solchen Formwerkzeugen, die infolge des auf die Kohlendioxidentwicklung zurückzuführenden inneren Drucks zu einer Vergrößerung des Innenvolumens tendieren, ist durch Anlegen eines äußeren Drucks der Aufbau und die Beibehaltung des erforderlichen Innendrucks sicherzustellen. Im Falle der Herstellung von mikrozellularen Formkörpern, deren Rohdichte geringfügig unter der Dichte der entsprechenden kompakten Formkörper, jedoch noch über 900 kg/m³ liegt, kann hierbei durch entsprechende Steuerung des äußeren Drucks eine kontrollierte Veränderung des Innenvolumens des Formwerkzeugs entsprechend der angestrebten Dichte des Formkörpers bewirkt werden, wobei jedoch stets darauf zu achten ist, daß der Innendruck im Formwerkzeug ausreichend groß ist, daß das gebildete Kohlendioxid zum überwiegenden Teil in Lösung bleibt.

Weil die Viskosität des frischen Reaktionsgemischs gegebenenfalls sehr niedrig sein kann, und das Werkzeug oftmals nur mit sehr aufwendigen Maßnahmen abzudichten ist, ist es oft empfehlenswert, den äußeren Druck erst dann aufzubringen, wenn durch die beginnende Reaktion die Viskosität schon angestiegen ist. Diese zeitlich verzögerte Druckanwendung läßt sich beispielsweise durch Einsatz von sog. Tauchkantenwerkzeugen und entsprechenden Pressen oder mittels der Nachdrucktechnik technisch realisieren. Geeignete Tauchkantenwerkzeuge sind beispielsweise im «Kunststoff-Handbuch», Carl-Hanser-Verlag, München (1973), Band 8, «Polyester» auf Seite 488 beschrieben. Vorrichtungen, die ein Arbeiten gemäß der sog. Nachdrucktechnik gestatten, sind beispielsweise in der EP-A-0 024 610 beschrieben.

Die erfindungswesentliche Bedingung, daß das gebildete Kohlendioxid ganz oder zum überwiegenden Teil in Lösung bleibt, besagt, daß bei massiver oder nur geringfügig mikrozellularer Struktur (Rohdichte von mindestens 1050 kg/m³) die resultierenden Formkörper bei der Entformung mindestens 70 Gew.-%, vorzugsweise mindestens 85 Gew.-% der aus der eingesetzten Wassermenge theoretisch errechenbaren Menge an Kohlendioxid gelöst enthalten. Die theoretisch errechenbare Menge an Kohlendioxid entspricht bei einer Isocyanatkennzahl von mindestens 100 der eingesetzten Wassermenge, d.h. pro Mol eingesetztem Wasser entsteht ein Mol Kohlendioxid. Bei Isocyanatkennzahlen von unter 100 wird bei der theoretischen Errechnung der Menge an Kohlendioxid davon ausgegangen, daß die molare Menge an gebildetem Kohlendioxid in erster Näherung der Anzahl der eingesetzten Mole Wasser multipliziert mit der Isocyanatkennzahl und geteilt durch 100 entspricht. Auch bei der Herstellung von Formkörpern einer zwischen 900 und 1050 liegenden Rohdichte kann davon ausgegangen werden, daß mehr als 50 Gew.-%, der theoretischen Kohlendioxidmenge in dem Formkörper gelöst sind, da selbst bei einer Rohdichte von nur 900 kg/m³ (bei einer angenommenen Dichte des entsprechenden, nicht geschäumten Formkörpers von 1100 kg/m³) das Gasvolumen der Poren lediglich 22%, bezogen auf das Gesamtvolumen des Formkörpers beträgt. In der Annahme, daß das in den Poren vorliegende Gas nicht unter Überdruck steht, würde dies bedeuten, daß in einem Formkörper der Dichte 900 kg/m³ pro 1000 cm³ Volumen 220 cm³ Kohlendioxid entsprechend 0,01 Mol Wasser vorliegen. Tatsächlich werden jedoch bei der Durchführung des erfindungsgemäßen Verfahrens im allgemeinen stets mehr als 0,30 Mol Wasser pro 900 g Reaktionsgemisch eingesetzt. Selbst bei einem Druck des Kohlendioxids in den Poren von 10 bar (der bereits zu einer Verformung bzw. zum Platzen der Formkörper führen würde) würden in den Poren lediglich 0,1 Mol Kohlendioxid pro 900 g vorliegen, d.h. weniger als $^{1}/_{3}$ der aus der eingesetzten Wassermenge errechenbaren Menge.

Der beim erfindungsgemäßen Verfahren erforderliche Innendruck im Formwerkzeug liegt im allgemeinen innerhalb des Bereichs von 40 bis 180, vorzugsweise 80 bis 150 bar. Bei Verwendung von weniger als 2,5 Gew.-% Wasser, bezogen auf das gesamte Reaktionsgemisch, ist im allgemeinen ein Druck von 40–120 bar ausreichend. Bei höheren Wassermengen kann ein über 120 bar liegender Druck notwendig sein.

Bei der vollständigen Befüllung des Werkzeughohlraums und Verwendung von Formwerkzeugen mit konstantem Innenvolumen entstehen beim erfindungsgemäßen Verfahren massive Formteile. Bei einer kontrollierten Vergrößerung des Innenvolumens des Werkzeuges während der chemischen Reaktion (beispielsweise durch ein über die Zuhaltekraft der Schließe steuerbares geringfügiges Herausfahren des Werkzeugkerns oder eines Teils hiervon aus dem Formenhohlraum) oder auch bei einer geringfügigen Vergrößerung des Innenvolumens der Form aufgrund der elastischen Verformbarkeit des Werkzeugs erhält man mikrozellulare Formteile, die jedoch stets eine geschlossene Oberflächenschicht aufweisen.

Das gleiche Ergebnis kann im Prinzip auch durch nur teilweises Befüllen einer druckstabilen Form mit konstantem Innenvolumen erreicht werden. Wie jedoch bereits ausgeführt, werden die Formen bei der Durchführung des erfindungsgemäßen Verfahrens vorzugsweise vollständig mit dem flüssigen Reaktionsgemisch gefüllt, bevor die chemische Reaktion einsetzt. Bei allen Varianten, sei es die Verwendung von Formwerkzeugen mit variablem Innenvolumen oder sei es die Arbeitsweise eines nur teilweisen Befüllens der Form, muß jedoch stets darauf geachtet werden, daß Formkörper erhalten werden, deren Rohdichte (DIN 53 420) oberhalb 900 kg/m³, vorzugsweise oberhalb 1050 kg/m³ liegt.

Es muß als außerordentlich überraschend bezeichnet werden, daß die große Mengen an Kohlendioxid enthaltenden Formkörper sehr rasch entformt werden können, ohne daß es durch die plötzliche Entspannung zu Rissen, Blasenbildung oder Verformung des Formteils käme. Im allgemeinen können die Formkörper nach einer Formstandzeit von 2 bis 5 Minuten bei 30 bis 70, vorzugsweise 50 bis 60 °C entformt werden.

Die entformten Formkörper geben bei Lagerung bei Raumtemperatur allmählich das in ihnen gelöst vorliegende Kohlendioxid durch Diffusion ab. Nach einer ca. 12-stündigen Lagerung bei Raumtemperatur sind ca. 60% des ursprünglich gelösten Kohlendioxids verschwunden. Nach dieser Zeit kann man die Formteile ohne Riß- oder Blasenbildung auch auf z. B. 120 °C erhitzen. Bei Verwendung hoher Wassermengen und hoher Isocyanatkennzahl und entsprechend hoher Mengen an in den Formkörpern gelöstem Kohlendioxid kann ein Aufheizen der Formkörper auf 120–150 °C auch nach 12-stündiger Lagerung bei Raumtemperatur noch eine Rißbildung zur Folge haben. Man kann dies durch stufenweises Erwärmen vermeiden. Der Umstand, daß dieser Befund sowohl bei kompakten als auch bei mikrozellularen erfindungsgemäßen Formkörpern im gleichen Maße beobachtet wird, beweist, daß die starke Zunahme des Innendrucks in den «frischen» Formkörper bei deren Erwärmen, die ein «Platzen» der Formkörper zur Folge hat, stets praktisch ausschließlich auf den raschen Übergang des gelösten Kohlendioxids in gasförmiges Kohlendioxid unter entsprechendem Druckaufbau und nicht etwa auf den vergleichsweise geringen Gasdruck des in den Poren der mikrozellularen Formkörper in vergleichsweise geringen Mengen vorliegenden gasförmigen Kohlendioxids zurückzuführen ist.

Die beim erfindungsgemäßen Verfahren erhaltenen Formkörper weisen eine über 900 kg/m³, vorzugsweise eine bei 1050 bis 1200 kg/m³ liegende Dichte auf. Eine oberhalb 1200 kg/m³ liegende Dichte kann bei der Verwendung von hochgefüllten Reaktionsgemischen unter Verwendung von Füllstoffen einer hohen Dichte resultieren. Die Formkörper weisen stets eine kompakte, d. h. geschlossene Oberflächenschicht auf. Besonders homogene Formkörper, die frei von Einfallstellen, Bläschen und Oberflächenporositäten sind, erhält man bei Kombination des erfindungsgemäßen Verfahrensprinzips mit der in EP-A-0 024 610 beschriebenen Nachdrucktechnik, d. h. bei Durchführung des erfindungsgemäßen Verfahrens in Formwerkzeugen der in dieser Vorveröffentlichung beschriebenen Art.

Das erfindungsgemäße Verfahren gestattet die Herstellung von hochwertigen Polyurethanformkörpern eines sehr breiten Härtebereichs von ca. 65 Shore A (Elastomere) bis mindestens 80 Shore D. Vorzugsweise werden beim erfindungsgemäßen Verfahren das Molekulargewicht der Ausgangskomponenten, ihre Funktionalität und die Menge des Wassers so zu messen, daß Formkörper einer Shore A-Härte von mindestens 70, besonders bevorzugt einer Shore D-Härte von mindestens 40 und insbesondere einer Shore D-Härte von 40–80 resultieren.

Der besondere Vorteil des erfindungsgemäßen Verfahrens ist darin zu sehen, daß es unter Verwendung eines toxikologisch völlig unbedenklichen Kettenverlängerungsmittels (Wasser) die Herstellung von weitgehend massiven, Harnstoffmodifizierten Polyurethankunststoffen gestattet, die bezüglich ihrer hervorragenden mechanischen Eigenschaften den entsprechenden aminverlängerten Polyurethanen des Standes der Technik nicht nachstehen, und bei deren Herstellung auf die Mitverwendung von Diamin-Kettenverlängerungsmitteln ganz oder weitgehend verzichtet werden kann. Ein weiterer Vorteil der erfindungsgemäß zum Einsatz gelangenden Reaktivsysteme gegenüber den genannten Systemen des Standes der Technik, welche hochreaktive aromatische Diamine als Kettenverlängerer enthalten, ist in der verlängerten Fließzeit der erfindungsgemäß zum Einsatz gelangenden Reaktionsgemische zu sehen, aufgrund derer auch großvolumige und Verästelungen aufweisende Formen ohne Schwierigkeiten befüllt werden können, bevor die zum Polyurethan führende chemische Reaktion einsetzt.

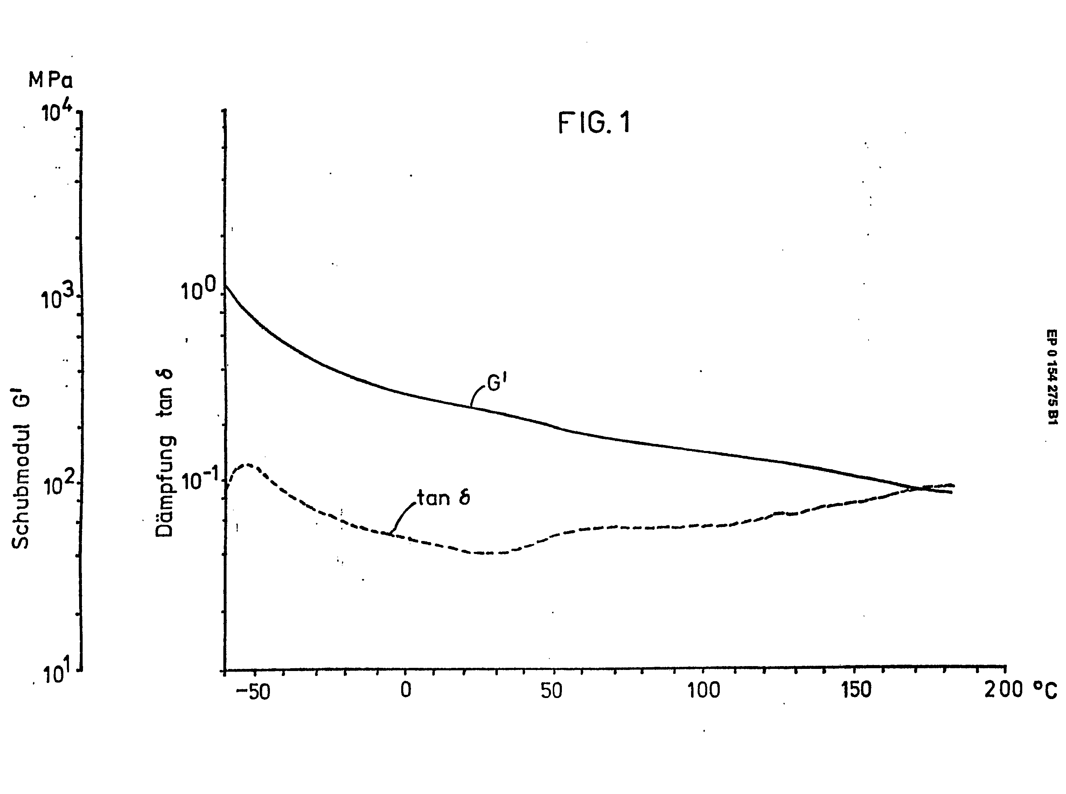

Hervorzuheben ist bei den erfindungsgemäßen Produkten die bislang noch nicht beobachtete Kombination von hervorragenden mechanischen Eigenschaften, insbesondere das excellente Verhalten bei hohen Temperaturen, und gleichzeitig günstigen, d. h. wirtschaftlichen Verarbeitungseigenschaften. Die hervorragenden mechanischen Eigenschaften sind gekoppelt mit einer weitgehend waagerecht verlaufenden Darstellung des Schubmodul- bzw. Dampfungskurvenverlaufs (s. Figuren 1) und 2)). Diesen Darstellung ist zu entnehmen, daß solche Formteile kurzfristig bis 180 °C – beispielsweise in einem Lackierofen – belastet werden dürfen. Formteile aus diesem erfindungsgemäßen Reaktionsmaterial, Stärke 4,5, konnten bereits nach 60'' entformt werden.

Diese schnelle Entformbarkeit ist nicht nur beschränkt auf vergleichsweise steife Produkte des erfindungsgemäßen Verfahrens, sondern sie gilt auch für die weichen Einstellungen, selbst mit großen Wandstärken.

Die erfindungsgemäßen Verfahrensprodukte können für die unterschiedlichsten Anwendungsgebiete Verwendung finden, z.B. als Verschleißbeläge, Siebplatten, Filterplatten, technische Antriebs- und Getriebeteile, Dichtungen, Bälge, Reifen, Rollen, Walzen, Lagerelemente, Schuhsohlen, Absätze, Stiefel, Stoßfänger, Puffer, Karosserieteile für Kraftfahrzeuge, Behälter, Koffer, Gehäuse und Formteile für Computer, Kopiergeräte, Fernsehgeräte, Fernschreiber, Elektro-, Klima-, Haushalts- und Kühl-Geräten, Kabelverteilerkästen, Skiern und ähnlichen Artikeln des täglichen Gebrauchs.

In den nachfolgenden Beispielen beziehen sich alle Prozentangaben auf Gewichtsprozente.

Beispiele

In den nachfolgenden Beispielen werden folgende Rohstoffe eingesetzt:

Komponenten a):
Polyisocyanat I:
Polyisocyanatgemisch der Diphenylmethanreihe, hergestellt durch Phosgenierung eines Anilin/Formaldehyd-Kondensats, mit einem NCO-Gehalt von 31,5% und einer Viskosität bei 25°C von 100 mPa · s.

Polyisocyanat II:
Umsetzungsprodukt eines Polyisocyanatgemisches der Diphenylmethanreihe mit einem Gehalt an Diisocyanatodiphenylmethan-Isomeren von 90% mit Tripropylenglykol. NCO-Gehalt: 24,6%.

Polyisocyanat III:
NCO-Semiprepolymer mit einem NCO-Gehalt von 19,5%, hergestellt durch Umsetzung von 4,4'-Diisocyanatodiphenylmethan mit einem Polyesterdiol des Molekulargewichts 2000 aus Adipinsäure und einem Gemisch aus Ethylenglykol und Butandiol im Gewichtsverhältnis 70:30.

Polyisocyanat IV:
2,4-Diisocyanatotoluol.

Komponenten b):
Polyol I:
Polyetherpolyol der OH-Zahl 28, hergestellt durch Propoxylierung von Sorbit und Ethoxylierung des Propoxylierungsproduktes (Gewichtsverhältnis PO:EO = 83:17).

Polyol II:
Polyetherpolyol der OH-Zahl 28, hergestellt durch Propoxylierung von Trimethylolpropan und anschließende Ethoxylierung des Propoxylierungsproduktes (Gewichtsverhältnis PO:EO = 78:22).

Polyol III:
Polyesterdiol der OH-Zahl 56, hergestellt durch Umsetzung von Adipinsäure mit einem Gemisch aus 1,4-Dihydroxybutan und Ethylenglykol im Gewichtsverhältnis 50:50.

Komponenten c):
Kettenverlängerer I:
Gemisch aus 70% 2,4-Diamino-3,5-diethyl-toluol mit 30% 2,6-Diamino-3,5-diethyl-toluol.

Kettenverlängerer II:
Propoxylierungsprodukt von Ethylendiamin der OH-Zahl 800.

Komponenten d):
Zusatzmittel I:
Handelsüblicher Polyetherpolysiloxan-Stabilisator («Stabilisator OS 50» der Bayer AG, Leverkusen).

Zusatzmittel II:
Amidgruppenhaltiges Salz aus 2 Mol Ölsäure und 1 Mol N-Dimethylamino-propylamin. Dieses Zusatzmittel erfüllt die Doppelfunktion eines Emulgators und eines inneren Trennmittels.

Allgemeine Versuchsbeschreibung:
Die Verarbeitung erfolgte auf handelsüblichen Hochdruckdosier- und Mischaggregaten. Dazu wurden – wie bei der Polyurethanschaumherstellung üblich – die Komponenten b bis d und das Wasser zu einem Polyolgemisch zusammengefaßt. Die Temperatur der Rohstoffe lag bei der Verarbeitung bei ca. 35°C mit Ausnahme von Beispiel Nr. 11, wo Polyolgemisch und Isocyanat auf 50–55°C vorgewärmt wurden.

Werkzeug:
Plattenform der inneren Abmessung 50 × 80 × 0,45 cm, deren Innenflächen mit einem handelsüblichen äußeren Trennmittel auf Wachsbasis (Acmosil® 180 der Firma Acmos, Bremen) beschichtet worden sind. Es handelt sich um ein öltemperiertes Tauchkantenwerkzeug aus Stahl. Das Werkzeug wurde während der Durchführung der Versuche bei einer Temperatur von 50–60°C (Oberflächentemperatur) gehalten.

Mischkopf:
MQ 18/4K der Fa. Hennecke, Birlinghoven

Messung des Werkzeuginnendrucks:
Druckaufnehmer (P3M/200; Hersteller: Fa. Hottinger, Darmstadt) im Mittelpunkt der Platte.

Bestimmung des $CO_2$-Verlusts:
Der Kohlendioxidverlust wurde durch Wägen des Formteils a) direkt nach der Entformung und b) nach 12-stündigem Lagern bei Raumtemperatur und anschließendem Tempern während 60 Min. bei 120°C ermittelt.

Schließe:

Es wurde eine handelsübliche Presse (Typ: 300K400PO) der Firma Paul Ott, Waibling-Neustadt, mit einer Zuhaltekraft von 400 t verwendet.

Allgemeine Anmerkungen:

Die Beispiele 1 bis 6 und das Beispiel 7 stellen Beispiele für die Wasservernetzung bei unterschiedlichen Wassermengen und unter Verwendung von unterschiedlichen Polyisocyanattypen der Diphenylmethanreihe dar.

Die Beispiele 6A bis 6D und 7A bis 7C zeigen die Variationsmöglichkeiten bezüglich der Isocyanatkennzahl. Beispiel 6C ist ein Vergleichsbeispiel (Kennzahl = 135), welches zeigt, daß bei dieser Kennzahl nicht mehr tolerierbare Entformungszeiten in Kauf genommen werden müssen, weil die Aushärtung zu langsam vonstatten geht. Wie aus diesen Beispielen ersichtlich, weisen die Formkörper, die mit einer unter 100 liegenden Kennzahl hergestellt worden sind, deutlich geringere Härten auf.

Das Beispiel 8 entspricht, von der Polyisocyanatkomponente a) abgesehen, dem Beispiel 7.

Die Beispiele 9 und 10 zeigen die Wasservernetzung unter gleichzeitiger Mitverwendung von ca. 30 Mol-%, bezogen auf Wasser, eines aromatischen Diamin-Kettenverlängerers.

Die Beispiele 11 und 12 zeigen die Herstellung von vergleichsweise weichen Elastomeren.

Art und Mengenverhältnisse der in den Beispielen eingesetzten Ausgangsmaterialien und die ermittelten Analysedaten und Testergebnisse sind in den nachfolgenden Tabellen 1 und 2 zusammengefaßt. Die Zahlenangaben in Tabelle 1 bezüglich der Rezepturen betreffen, soweit nicht anderslautend vermerkt, Gewichtsteile.

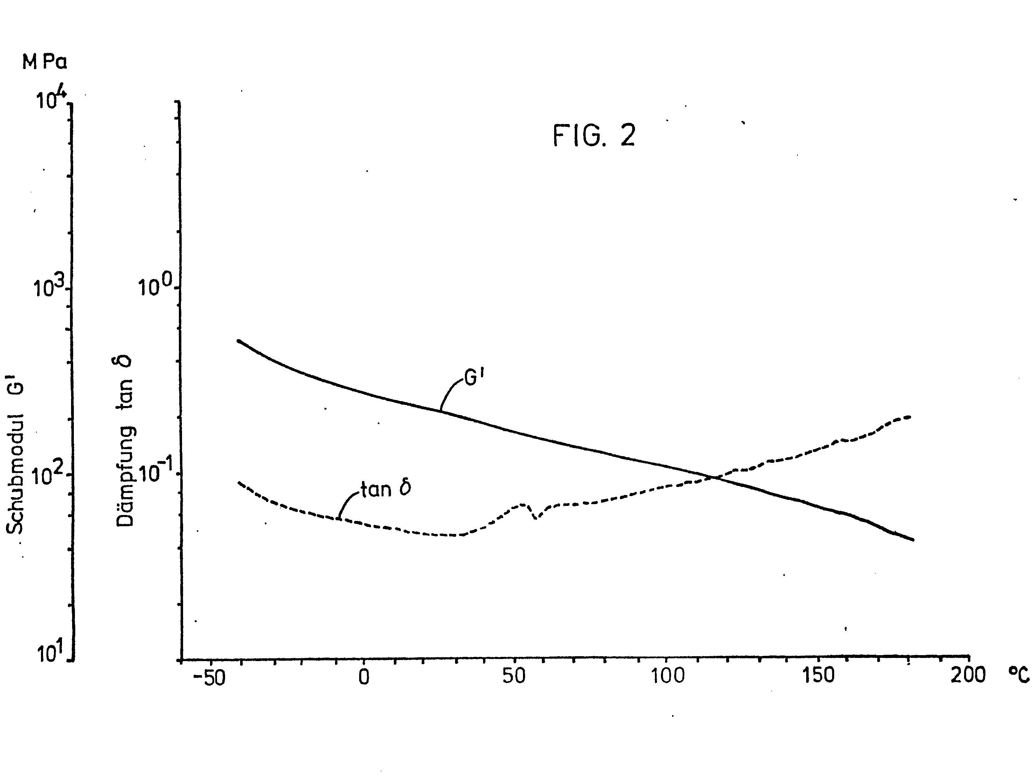

Fig. 1 und Fig. 2 gibt die Ergebnisse des Torsionsschwingungsversuchs nach DIN 53 445 (Schubmodul G' bzw. Dämpfung tan δ) für Beispiele 4 beziehungsweise 6 wieder.

Versuchsbedingungen: Material +2 Deckschichten B: 4,30 mm, H 1,24 mm, L 50,00 mm; $R_D$ 1040 kg/m³.

Tabelle 1: Rezepturen

| Patentbeispiel Nr. | 1 | 2 | 3 | 4 | 5 |
|---|---|---|---|---|---|
| Komponenten b) | | | | | |
| Polyol I | 80,9 | 80,0 | 78,7 | 77,5 | 77,5 |
| "   II | — | — | — | — | — |
| "   III | — | — | — | — | — |
| Komponenten c) | | | | | |
| Kettenverlängerer II | 10,5 | 10,4 | 10,2 | 10,1 | 10,1 |
| "   I | — | — | — | — | — |
| Komponenten d) | | | | | |
| Zusatzmittel I | 2,10 | 2,08 | 2,04 | 2,01 | 2,01 |
| "   II | 3,15 | 3,11 | 3,07 | 3,02 | 3,02 |
| Triethylendiamin[+)] | 0,63 | 0,62 | 0,61 | 0,60 | 0,60 |
| Dibutylzinndilaurat | 0,21 | 0,21 | 0,20 | 0,20 | 0,20 |
| Propylencarbonat (Weichmacher) | — | — | — | — | — |
| Wasser | 2,45 | 3,63 | 5,11 | 6,55 | 6,55 |
| Isocyanat-Kennzahl (%) | 105 | 105 | 105 | 105 | 105 |
| Komponente a) | | | | | |
| Polyisocyanat I | 66 | 84 | 107 | 130 | — |
| "   II | — | — | — | — | 164 |
| "   III | — | — | — | — | — |
| "   IV | — | — | — | — | — |
| Wasser bezogen auf Gesamtmenge des Polymers (Gew.-%) | 1,48 | 1,97 | 2,47 | 2,85 | 2,48 |
| gCO₂ (theor., bez. auf 1 kg Polymer) | 36,2 | 48,2 | 60,4 | 69,7 | 60,6 |
| gCO₂ (gef., bez. auf 1 kg Polymer) | — | — | — | — | — |
| CO₂ gef. in % der Theorie | — | — | — | — | — |
| Reaktionszeiten | | | | | |
| Start-/Abbindzeiten | 12"/37" | | | | |
| Formzeit | 4'–5' | | | | |
| max. Werkzeuginnendruck (bar) | 80–100 | 80–100 | 80–100 | 100–120 | 100–120 |

[+)] 30 Gew.-% in Dipropylenglykol

Tabelle 1: Fortsetzung

| Patentbeispiel Nr. | 6 | 6 A | 6 B | 6 C | 6 D | 7 | 7 A |
|---|---|---|---|---|---|---|---|
| Komponenten b) | | | | | | | |
| Polyol I | – | | | | | – | |
| " II | 85,7 | | | | | 86,8 | |
| " III | – | | | | | – | |
| Komponenten c) | | entsprechend 6 | entsprechend 6 | entsprechend 6 | entsprechend 6 | | entsprechend 7 |
| Kettenverlängerer II | – | | | | | – | |
| " I | 2,22 | | | | | 2,25 | |
| Komponenten d) | | | | | | | |
| Zusatzmittel I | 2,22 | | | | | 2,25 | |
| " II | 3,34 | | | | | 3,38 | |
| Triethylendiamin[+)] | 0,67 | | | | | 0,68 | |
| Dibutylzinndilaurat | 0,33 | | | | | 0,11 | |
| Propylencarbonat (Weichmacher) | – | | | | | – | |
| Wasser | 5,56 | | | | | 4,51 | |
| Isocyanat-Kennzahl (%) | 105 | 115 | 125 | 135 | 95 | 105 | 85 |
| Komponente a) | | | | | | | |
| Polyisocyanat I | – | – | – | – | – | – | – |
| " II | 125 | 137 | 149 | 161 | 113 | 104 | 84 |
| " III | – | – | – | – | – | – | – |
| " IV | – | – | – | – | – | – | – . |
| Wasser bezogen auf Gesamt-menge des Polymers (Gew.-%) | 2,47 | 2,35 | 2,23 | 2,13 | 2,61 | 2,21 | 2,45 |
| $gCO_2$ (theor., bez. auf 1 kg Polymer) | 60,4 | | | | | 54,0 | 50,9 |
| $gCO_2$ (gef., bez. auf 1 kg Polymer) | 52 | | | | | 47 | 50 |
| $CO_2$ gef. in % der Theorie | 86 | | | | | 87 | 98 |
| Reaktionszeiten | | | | | | | |
| Start-/Abbindezeiten | 13″/45″ | | | nicht ent- | | | |
| Formzeit | 120″ | 5′ | 5′ | formbar | 120″ | 4′–5′ | |
| max. Werkzeuginnendruck (bar) | 100–120 | 80–100 | 100–120 | 100–120 | 80–100 | 80–100 | 80–100 |

[+)] 30 Gew.-% in Dipropylenglykol

Tabelle 1: Fortsetzung

| Patentbeispiel Nr. | 7 B | 7 C | 8 | 9 | 10 | 11 | 12 |
|---|---|---|---|---|---|---|---|
| Komponenten b) | | | | | | | |
| Polyol I | | | | – | | – | – |
| " II | | | | 78,0 | | – | 94,4 |
| " III | | | | – | | 83,4 | – |
| Komponenten c) | entsprechend 7 | entsprechend 7 | entsprechend 7 | | entsprechend 9 | | |
| Kettenverlängerer II | | | | – | | – | – |
| " I | | | | 12,2 | | 0,83 | – |
| Komponenten d) | | | | | | | |
| Zusatzmittel I | | | | 2,02 | | 1,67 | 1,91 |
| " II | | | | 3,04 | | – | – |
| Triethylendiamin[+)] | | | | 0,61 | | 0,50 | 1,91 |
| Dibutylzinndilaurat | | | | 0,10 | | 0,08 | 0,29 |
| Propylencarbonat (Weichmacher) | | | | – | | 12,50 | – |
| Wasser | | | | 4,05 | | 1,04 | 1,27 |
| Isocyanat-Kennzahl (%) | 75 | 70 | 105 | 105 | 105 | 105 | 110 |
| Komponente a) | | | | | | | |
| Polyisocyanat I | – | – | – | – | – | – | – |
| " II | 74 | 64 | – | – | 113 | – | – |
| " III | – | – | 130 | 142 | – | 62 | – |
| " IV | – | – | – | – | – | – | 20 |

Tabelle 1: Fortsetzung

| Patentbeispiel Nr. | 7 B | 7 C | 8 | 9 | 10 | 11 | 12 |
|---|---|---|---|---|---|---|---|
| Wasser bezogen auf Gesamtmenge des Polymers (Gew.-%) | 2,59 | 2,75 | 1,96 | 1,67 | 1,90 | 0,64 | 1,08 |
| $gCO_2$ (theor., bez. auf 1 kg Polymer) | | | 43,6 | 40,8 | 46,4 | 15,6 | 31,0 |
| $gCO_2$ (gef., bez. auf 1 kg Polymer) | | | 42 | 41 | – | – | – |
| $CO_2$ gef. in % der Theorie | | | 96 | 100 | – | – | – |
| Reaktionszeiten | | | | | | | |
| Start-/Abbindezeiten | | | | 14"/41" | | 13"/32" | 10"/53" |
| Formzeit | | | | | | 5' | 6'–7' |
| max. Werkzeuginnendruck (bar) | 80–100 | 80–100 | 80–100 | 80–100 | 80–100 | 40–80 | 80–100 |

+) 30 Gew.-% in Dipropylenglykol

Tabelle 2: Prüfergebnisse, ermittelt an ca. 4,2 mm starken Prüfkörpern

| Patentbeispiel Nr. | 1 | 2 | 3 | 4[++] | 5 | 6[++] | 6 A | 6 B | 6 C |
|---|---|---|---|---|---|---|---|---|---|
| Rohdichte | 1141 | 1155 | 1168 | 1105 | 1077 | 1072 | 1029 | 1055 | – |
| Härte Shore A | – | – | – | – | – | – | – | – | – |
|     Shore D | 60–61 | 65–66 | 69–70 | 72–73 | 77–78 | 73–74 | 73–75 | 75–77 | – |
| Zugversuch $\sigma_{100}$ | | | | | | | | | |
|    $\sigma_{300}$ | | | | | | | | | |
|    $\sigma_B$ | 23,5 | 29,1 | 34,2 | 32,7 | 33,6 | 29,5 | 31,5 | 28,8 | |
|    $\varepsilon_B$ | 45,8 | 48,3 | 33,0 | 22,5 | 35,1 | 65,1 | 65,4 | 52,1 | nicht entformbar |
| Zug-E-Modul | 389 | 503 | 708 | 757 | 1099 | 598 | 782 | 917 | |
| Weiterreißfestigkeit | | | | | | | | | |
| DVR (24 h/70°C) | – | – | – | – | – | – | – | – | |
| Abrieb | – | – | – | – | – | – | – | – | |
| SAG-Test 250°F | 4,66 | 3,3 | 0,77 | 0,87 | – | – | – | – | |
|     160°C | 18,0 | 10,0 | 3,8 | 2,5 | – | – | – | – | |
| Biegeversuch | 19,6 | 29,2 | 37,0 | 42,5 | 67,1 | 41,2 | – | – | |
| Biege-E-Modul[bB] | 299 | 452 | 586 | 655 | 1070 | 631 | – | – | |
| Schlagbiegeversuch | 38 | 51 | 61 | 66 | nicht gebr. | nicht gebr. | nicht gebr. | nicht gebr. | |
| Schubmodul 20°C | 160 | 202 | – | 245 | 415 | 217 | – | – | – |
|     120°C | 32,5 | 69,3 | – | 123,8 | 123 | 85 | – | – | – |
| tan δ 20°C | – | – | – | – | – | – | – | – | – |
|     120°C | – | – | – | – | – | – | – | – | – |

++) vgl. Fig. 2; Formteile aus diesem Material, Stärke 4,5 cm, konnten bereits nach 60" entformt werden.

Tabelle 2: Prüfergebnisse, ermittelt an ca. 4,2 mm starken Prüfkörpern

| Patentbeispiel Nr. | 6 D | 7 | 7 A | 7 B | 7 C | 8 |
|---|---|---|---|---|---|---|
| Rohdichte | 1042 | 1138 | 1140 | 1140 | 1120 | 1172 |
| Härte Shore A | – | – | – | – | – | 96–97 |
|     Shore D | 70–71 | 64–65 | 53–55 | 44–45 | 38–40 | 43–44 |
| Zugversuch $\sigma_{100}$ | | – | – | 13,9 | 10,4 | 9,8 |
|    $\sigma_{300}$ | | – | – | – | – | 13,7 |
|    $\sigma_B$ | 27,8 | 27,8 | 20,5 | 16,5 | 13,5 | 16,3 |
|    $\varepsilon_B$ | 66,6 | 95,7 | 105 | 124 | 133 | 400 |
| Zug-E-Modul | 508 | 372 | 197 | – | – | 123 |
| Weiterreißfestigkeit | | 37,4 | 35,3 | 22,8 | 19,8 | 57,1 |

Tabelle 2: Fortsetzung

| Patentbeispiel Nr. | | 6 D | 7 | 7 A | 7 B | 7 C | 8 |
|---|---|---|---|---|---|---|---|
| DVR (24 h/70 °C) | | – | – | – | – | – | – |
| Abrieb | | – | – | – | – | – | 58 |
| SAG-Test | 250 °F | – | – | – | – | – | – |
| | 160 °C | – | – | – | | | – |
| Biegeversuch | | – | 25,3 | 15,9 | | | 7,4 |
| Biege-E-Modul[bB] | | – | 380 | 232 | | | 99 |
| Schlagbiegeversuch | | nicht gebr. | – | – | | | – |
| Schubmodul | 20 °C | – | 139 | 71,5 | – | – | 54,5 |
| | 120 °C | – | 50,4 | 23,3 | – | – | 26,8 |
| tan δ | 20 °C | – | – | – | – | – | 0,075 |
| | 120 °C | – | – | – | – | – | 0,056 |

Tabelle 2: Prüfergebnisse, ermittelt an ca. 4,2 mm starken Prüfkörpern

| Patentbeispiel Nr. | | 9 | 10 | 11[++] | 12 | Dim. | DIN |
|---|---|---|---|---|---|---|---|
| Rohdichte | | 1157 | 1089 | 1150 | 1150 | $kg/m^3$ | 53420 |
| Härte | Shore A | – | – | 72 | 94 | – | 53505 |
| | Shore D | 50–52 | 69–70 | 22 | 45 | – | 53505 |
| Zugversuch | $\sigma_{100}$ | – | – | $2,9^+$ | $17,5^+$ | MPa | 53455 |
| | $\sigma_{300}$ | – | – | 5,0 | – | MPa | |
| | $\sigma_B$ | 28,7 | 31,5 | 25,8 | 19,0 | MPa | |
| | $\varepsilon_B$ | 323 | 69,6 | 686 | 350 | % | |
| Zug-E-Modul | | 217 | 478 | – | | MPa | |
| Weiterreißfestigkeit | | – | – | 21,1 | 25 | kN/m | 53515 |
| DVR (24 h/70 °C) | | – | – | – | 45 | % | 53517 |
| Abrieb | | – | – | 47 | 70 | mg | 53516 |
| SAG-Test | 250 °C | – | – | – | – | mm | ASTM D3769–7 |
| | 160 °F | – | – | – | – | mm | |
| Biegeversuch | | 10,4 | 30,2 | – | – | MPa | 53452 |
| Biege-E-Modul[dB] | | 144 | 483 | | – | MPa | 53452 |
| Schlagbiegeversuch | | – | – | – | – | $kJ/m^2$ | 53421 |
| Schubmodul | 20 °C | – | – | – | 22 | MPa | 53445 |
| | 120 °C | – | – | – | 27 | MPa | |
| tan δ | 20 °C | – | – | – | 0,039 | – | |
| | 120 °C | – | – | – | 0,019 | – | |

$^+$ DIN 53504
$^{++}$ Ein ringförmiger Körper mit einem Querschnitt von 180 × 70 mm, hergestellt gemäß Patentbeispiel 11 ist nach 7 Minuten entformbar.

## Patentansprüche

1. Verfahren zur Herstellung von massiven oder mikrozellularen Formkörpern auf Basis von Harnstoffgruppen aufweisenden Polyisocyanat-Polyadditionsprodukten mit einer geschlossenen Oberflächenschicht und einer über 900 kg/m³ liegenden Rohdichte durch Umsetzung von

a) einer Polyisocyanatkomponente, bestehend aus mindestens einem Polyisocyanat mit ausschließlich aromatisch gebundenen Isocyanatgruppen mit

b) Verbindungen mit mindestens zwei gegenüber Isocyanatgruppen reaktionsfähigen Wasserstoffatomen des Molekulargewichtsbereichs 400 bis 12 000, in einer Menge von mindestens 25 Gew.%, bezogen auf das gesamte Reaktionsgemisch ohne Einbeziehung von gegebenenfalls mitverwendeten inerten Hilfs- und Zusatzmitteln,

c) gegebenenfalls Verbindungen mit mindestens zwei gegenüber Isocyanatgruppen reaktionsfähigen Wasserstoffatomen des Molekulargewichtsbereichs 60 bis 399 und

d) gegebenenfalls den üblichen Hilfs- und Zusatzmitteln,

wobei das Reaktionsgemisch nach der Reaktionsspritzgußtechnik verarbeitet wird, dadurch gekennzeichnet, daß man

(i) die Umsetzung in Gegenwart von Wasser in einer Menge von mindestens 0,15 Mol pro Mol Isocyanatgruppen der Komponente a) unter Einhaltung einer Isocyanatkennzahl, bezogen auf alle an der Umsetzung beteiligten Reaktionskomponenten, von 70 bis 125 durchführt, wobei die Menge an organischen Diaminen in Komponente c) maximal 30 Mol% , bezogen auf das eingesetzte Wasser, beträgt, und wobei man

(ii) das Reaktionsgemisch in eine geschlossene Form einträgt, in welcher während der Reaktion in dem Reaktionsgemisch ein solcher Druck oberhalb 40 bar aufrechterhalten wird, daß das im Verlauf der Reaktion gebildete Kohlendioxid ganz oder überwiegend im Reaktionsgemisch bzw. dem entstehenden Formkörper gelöst bleibt, und man

(iii) den resultierenden Formkörper nach Beendigung der Reaktion entformt.

2. Verfahren gemäß Anspruch 1, dadurch gekennzeichnet, daß man als Polyisocyanatkomponente a) gegebenenfalls Urethan-, Carbodiimid- und/oder Isocyanurat-modifizierte Polyisocyanate oder Polyisocyanatgemische der Diphenylmethanreihe verwendet.

3. Verfahren gemäß Anspruch 1 und 2, dadurch gekennzeichnet, daß man als Verbindungen b) mit gegenüber Isocyanatgruppen reaktionsfähigen Gruppen Polyester- und/oder Polyetherpolyole des Molekulargewichtsbereichs 400 bis 12 000 verwendet.

## Claims

1. A process for the production of solid or microcellular mouldings based on polyisocyanate polyaddition products containing urea groups and having a compact surface skin and a gross density above 900 kg/m³ by reaction of

a) a polyisocyanate component consisting of at least one polyisocyanate containing only aromatically bound isocyanate groups,

b) compounds containing at least two isocyanate-reactive hydrogen atoms and having a molecular weight in the range from 400 to 12,000 in a quantity of at least 25% by weight, based on the reaction mixture as a whole, not including any inert auxiliaries and additives used,

c) optionally compounds containing at least two isocyanate-reactive hydrogen atoms and having a molecular weight in the range from 60 to 399 and

d) optionally standard auxiliaries and additives, the reaction mixture being processed by reaction injection moulding, characterized in that

(i) the reaction is carried out in the presence of water in a quantity of at least 0.15 mol per mol isocyanate groups of component a) at an isocyanate index, based on all the reaction components involved in the reaction, of from 70 to 125, the quantity of organic diamines in component c) being at most 30 mol-%, based on the water used,

(ii) the reaction mixture is introduced into a closed mould in which a pressure above 40 bar is maintained in the reaction mixture during the reaction so that the carbon dioxide formed during the reaction remains completely or predominantly dissolved in the reaction mixture and in the moulding formed and

(iii) the resulting moulding is removed from the mould on completion of the reaction.

2. A process as claimed in claim 1, characterized in that optionally urethane-, carbodiimide- and/or isocyanurate-modified polyisocyanates or polyisocyanate mixtures of the diphenylmethane series are used as the polyisocyanate component a).

3. A process as claimed in claims 1 and 2, characterized in that the polyester and/or polyether polyols having a molecular weight in the range from 400 to 12,000 are used as the compounds b) containing isocyanate-reactive groups.

## Revendications

1. Procédé de production d'objets moulés, massifs ou microcellulaires, à base de produits de polyaddition/polyisocyanates présentant des groupes urées, ayant une couche superficielle fermée et une masse volumique apparente supérieure à 900 kg/m³, par réaction

a) d'un composant polyisocyanate, consistant en au moins un polyisocyanate comportant des groupes isocyanates fixés exclusivement sur les fragments aromatiques, avec

b) des composés comportant au moins deux atomes d'hydrogène pouvant réagir avec des groupes isocyanates et dont le poids moléculaire se situe dans le domaine allant de 400 à 12 000, que l'on utilise en une quantité représentant au moins 25% en poids, sur la base du mélange réactionnel total, mais sans tenir compte d'adjuvants et d'additifs inertes éventuellement utilisés aussi,

c) éventuellement de composés comportant au moins deux atomes d'hydrogène, pouvant réagir avec des groupes isocyanates et dont le poids moléculaire se situe dans le domaine allant de 60 à 399, et

d) éventuellement d'adjuvants et additifs usuels,
procédé dans lequel le mélange réactionnel est mis en œuvre selon la technique du moulage par injection avec réaction, procédé caractérisé en ce que

(i) on conduit la réaction en présence d'eau, utilisée en une quantité d'au moins 0,15 mole par mole des groupes isocyanates du composant a) avec maintien d'un indice d'isocyanate, sur la base de tous les composants participant à la réaction, de 70 à 125, la proportion de diamines aromatiques s'élevant, dans le composant c) à 30 moles% au maximum, sur la base de l'eau utilisée, et

(ii) on introduit le mélange réactionnel dans un moule fermé dans lequel on maintient pendant la réaction une pression supérieure à 40 bars dans le mélange réactionnel de façon que le bioxyde de carbone, formé au cours de la réaction, demeure dissous, entièrement ou de façon prédominante, dans le mélange réactionnel ou dans l'objet moulé résultant, et

(iii) on démoule, après achèvement de la réaction, l'objet moulé résultant.

2. Procédé selon la revendication 1, caractérisé en ce qu'on utilise comme composant polyisocyanate a) des polyisocyanates ou des mélanges de polyisocyanates de la série du diphénylméthane, éventuellement modifiés par des groupes uréthannes, carbodiimides et/ou isocyanurates.

3. Procédé selon la revendication 1 et la revendication 2, caractérisé en ce qu'on utilise comme composés b) des polyester-polyols et/ou des polyéther-polyols, comportant des groupes capables de réagir avec des groupes isocyanates et dont le poids moléculaire se situe dans le domaine allant de 400 à 12 000.

FIG. 1

EP 0 154 275 B1

FIG. 2

MPa

Schubmodul G'

Dämpfung tan δ

G'

tan δ

EP 0 154 275 B1